# EUROPÄISCHE PATENTSCHRIFT

(11) **EP 3 267 701 B1**
(45) Veröffentlichungstag und Bekanntmachung des Hinweises auf die Patenterteilung: **12.09.2018**
(21) Anmeldenummer: 16178688.4
(22) Anmeldetag: 08.07.2016
(51) Int. Cl.: H04W 4/02, H04L 29/08

(54) **SERVER UND VERFAHREN ZUM POSITIONSABHÄNGIGEN FREISCHALTEN EINER APPLIKATION AUF EINEM MOBILEN ENDGERÄT**
SERVER AND METHOD FOR LOCATION-BASED ENABLEMENT OF AN APPLICATION ON A MOBILE DEVICE
SERVEUR ET PROCÉDÉ POUR L'ACTIVATION D'UNE APPLICATION SUR UN DISPOSITIF MOBILE BASÉ SUR LA LOCALISATION

(43) Veröffentlichungstag der Anmeldung: 10.01.2018
(73) Patentinhaber: Deutsche Telekom AG, 53113 Bonn (DE)
(72) Erfinder: GLUDOVACZ, Dieter, 2521 Trumau (AT)
(74) Vertreter: Patentship Patentanwaltsgesellschaft mbH

(56) Entgegenhaltungen:
- WO-A1-2016/037319
- US-A1- 2010 248 742
- US-A1- 2011 208 797
- US-A1- 2012 172 027
- US-A1- 2015 350 827

## Beschreibung

Die Erfindung betrifft Vorrichtungen und Verfahren zum Betreiben eines Kommunikationsnetzwerkes, insbesondere zum Betreiben eines 5G-Kommunikationsnetzwerks.

Die fünfte Generation der mobilen Technologie (5G) betrifft die Anforderungen und technischen Herausforderungen der künftigen Kommunikationsnetze ab etwa dem Jahr 2020 und darüber hinaus. Damit wird eine vollständig mobile und vernetzte Gesellschaft angesprochen, die durch ein enormes Wachstum an Datenverkehr sowie gegenseitiger Vernetzung auf mehreren Ebenen charakterisiert ist.

In 5G werden neue Funkschnittstellen benötigt, um den Anforderungen an die Nutzung höherer Frequenzen gerecht zu werden, beispielsweise für neue Anwendungen wie Internet der Dinge (loT), spezielle Fähigkeiten wie z.B. geringerer Laufzeit, welche über das hinausgehen, was 4G Kommunikationsnetze leisten können. Dabei wird 5G als ein Ende-zu-Ende System betrachtet, das sämtliche Netzwerkaspekte beinhaltet, und zwar mit einem Design, das einen hohen Grad an Konvergenz ermöglicht. 5G wird die heutigen Zugangsmechanismen und deren mögliche Weiterentwicklungen vollständig nutzen, einschließlich der heutigen Festnetzzugangstechnologien sowie vieler anderer noch zu entwickelnder Zugangstechnologien.

5G wird in einem stark heterogenen Umgebung operieren, d.h. mit mehreren Typen von Zugangstechnologien, mehrschichtigen Netzwerken, vielfältigen Typen von Kommunikationsgeräten und Nutzerinteraktionen und dergleichen. Verschiedenste Anwendungen mit diametralen Anforderungen sollen optimal unterstützt werden, z.B. ausfallsichere, robuste Kommunikation, Kommunikation mit geringen Datenraten oder breitbandige Kommunikation in dicht besiedelten Räumen. In solch einer Umgebung gibt es ein fundamentales Verlangen nach 5G, um ein nahtloses und konsistentes Nutzererlebnis über Zeit und Raum zu erfüllen. Für den Betreiber eines 5G-Kommunikationsnetzwerkes besteht die Notwendigkeit die eingesetzten Ressourcen optimal und dynamisch an die jeweiligen Anforderungen anzupassen, um die Vielzahl an Anwendungen gleichzeitig unterstützen zu können.

Deshalb besteht in 5G zum einen ein Bedürfnis danach, die Leistungsfähigkeit der Kommunikation zu steigern, insbesondere einen höheren Datendurchsatz, eine geringere Verzögerung, eine besonders hohe Zuverlässigkeit, eine weitaus höhere Verbindungsdichte und einen größeren Mobilitätsbereich zu erreichen, und zum anderen aber auch die Flexibilität im Betrieb des Kommunikationsnetzwerkes zu erhöhen sowie maßgeschneiderte Funktionen mit dem geringstmöglichen Einsatz von Mitteln bereitzustellen. Diese erhöhte Leistungsfähigkeit wird zusammen mit der Fähigkeit zur Steuerung stark heterogener Umgebungen und der Fähigkeit zur Sicherung von Vertrauen, Identität und Privatsphäre der Nutzer erwartet.

In US 2011/0208797 A1 ist ein Ansatz zur ortsbasierten Verwaltung von virtuellen Applikationen offenbart, wobei eine Meldung an eine Serverdatenbank erfolgen kann, ein bestimmter Nutzers alarmiert werden kann oder ein Zugriff eines Nutzers auf eine virtuelle Applikation entfernt werden kann. In US 2012/0172027 A1 ist ein Ansatz zur Verwendung eines Geo-Zauns zum ortsbasierten Aktivieren und Steuern von Diensten offenbart, wobei beispielsweise eine Temperatureinstellung eines Gebäudes gesteuert oder ein elektrisches Gerät automatisch aktiviert werden kann. In US 2015/0350827 A1 ist ein Ansatz zum Verwalten von Geo-Zaun-Benachrichtigungen offenbart, wobei eine Benachrichtigung verwendet wird, wenn sich ein Mobilgerät innerhalb eines Geo-Zaun-Bereichs länger als eine Schwellwertzeitdauer befindet. In US 2010/0248742 A1 ist ein Ansatz zum Beschränken einer Teilnahme eines Terminals an einem Kommunikationsdienst offenbart, wobei eine Prioritätsstufe des Terminals verwendet wird. In WO 2016/037319 A1 ist das positionabhängige Anbieten von MVNO Services offenbart.

Es ist davon auszugehen, dass die Zahl an Kommunikationsgeräten, die auf die Dienste eines Kommunikationsnetzwerks, beispielsweise eines Kommunikationsnetzwerkes gemäß dem 5G-Standard zugreifen, in Zukunft stark zunehmen wird. Aufgrund der steten Weiterentwicklungen im Bereich der Computertechnologie wird parallel hierzu auch die technische Leistungsfähigkeit der Kommunikationsgeräte selbst, insbesondere von Smartphones, immer mehr zunehmen. Im Lichte dieser Entwicklungen ist absehbar, dass in zukünftigen Kommunikationsnetzwerken, insbesondere in Kommunikationsnetzwerken gemäß dem 5G-Standard, eine große Menge an Ressourcen, wie Rechenleistung, Speicherplatz und dergleichen, vorhanden sein werden. Diese Ressourcen, die sowohl Hardware- als auch Softwareressourcen umfassen können, in einem Kommunikationsnetzwerk zu verwalten, stellt eine große Aufgabe für zukünftige Kommunikationsnetzwerke dar.

Diese Aufgabe wird durch die Merkmale der unabhängigen Ansprüche gelöst. Vorteilhafte Weiterbildungsformen sind Gegenstand der abhängigen Ansprüche.

Die im Folgenden vorgestellten Verfahren und Systeme können auf verschiedene Arten und Weisen implementiert sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Zugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Im Festnetz umfasst das Zugangsnetz beispielsweise einen DSLAM (digital subscriber line access multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

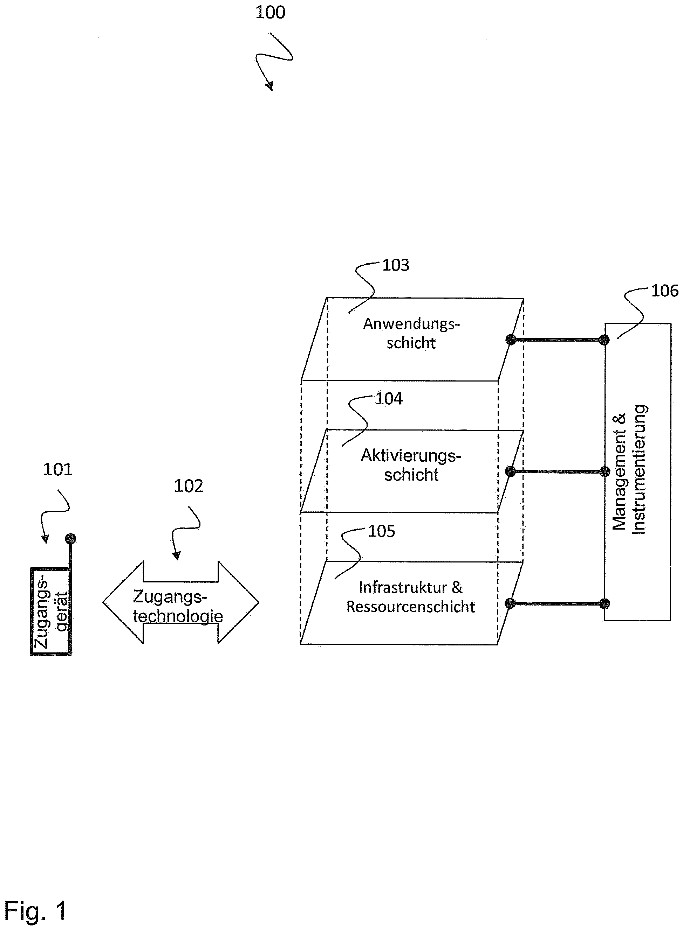

Die im Folgenden vorgestellten Geräte, Systeme und Verfahren sind dazu vorgesehen, die Kommunikation in Kommunikationsnetzen zu steigern, insbesondere in Kommunikationsnetzen gemäß der im Folgenden vorgestellten 5G-Systemarchitektur. Figur 1 zeigt eine schematische Darstellung einer solchen 5G-Systemarchitektur 100. Die 5G-Systemarchitektur 100 umfasst einen Bereich mit 5G-Kommunikationsendgeräten 101, die über verschiedene Zugangstechnologien 102 mit einer mehrschichtigen Kommunikationsstruktur verbunden sind, welche eine Infrastruktur- & Ressourcenschicht 105, eine Aktivierungsschicht 104 und eine Anwendungsschicht 103 umfasst, die über eine Management- & Instrumentierungsebene 106 verwaltet werden.

Die Infrastruktur- & Ressourcenschicht 105 umfasst die physikalischen Ressourcen einer konvergenten Netzwerkstruktur aus Festnetz- und Mobilfunknetzkomponenten ("Fixed-Mobile Convergence") mit Zugangsknoten, Cloud-Knoten (bestehend aus Verarbeitungs- und Speicherknoten), 5G-Geräten wie z.B. Mobiltelefonen, tragbaren Geräten, CPEs, Maschinenkommunikationsmodulen und anderen, Netzwerkknoten und zugehörigen Links. 5G-Geräte können vielfältige und konfigurierbare Fähigkeiten umfassen und beispielsweise als Relay oder Hub agieren oder abhängig von dem jeweiligen Kontext als Computer/Speicher-Ressource arbeiten. Diese Ressourcen werden den höheren Schichten 104, 103 und der Management- & Instrumentierungsebene 106 über entsprechende APIs (Anwendungsprogramm-Schnittstellen) zur Verfügung gestellt. Das Überwachen der Leistungsfähigkeit und der Konfigurationen können inhärenter Teil solcher APIs sein.

Die Aktivierungsschicht 104 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, und einen Satz von Konfigurationsparametern für bestimmte Teile des Netzwerks, z.B. den Funkzugang. Diese Funktionen und Fähigkeiten können auf Anforderung durch die Management- & Instrumentierungsebene 106 aufgerufen werden, und zwar durch Nutzung der dafür vorgesehenen APIs. Für bestimmte Funktionen können mehrfache Varianten existieren, z.B. verschiedene Implementierungen derselben Funktionalität, welche unterschiedliche Leistungsfähigkeiten oder Charakteristiken haben. Die verschiedenen Grade der Leistungsfähigkeit und der angebotenen Fähigkeiten können dazu verwendet werden, um die Netzwerkfunktionalitäten wesentlich weiter zu unterscheiden, als es in heutigen Netzen möglich ist, beispielsweise als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 103 umfasst spezifische Anwendungen und Dienste des Netzwerkbetreibers, des Unternehmens, des vertikalen Operators oder von Drittparteien, die das 5G-Netzwerk nutzen. Die Schnittstelle zu der Management- & Instrumentierungsebene 106 erlaubt zum Beispiel, bestimmte, d.h. dedizierte Netzwerk-Slices für eine Anwendung aufzubauen, oder eine Anwendung einer existierenden Netzwerk-Slice zuzuweisen.

Die Management- & Instrumentierungsebene 106 ist der Kontaktpunkt, um die geforderten Anwendungsfälle in tatsächliche Netzwerkfunktionen und Slices umzusetzen. Sie definiert die Netzwerk-Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 105 ab. Die Management- & Instrumentierungsebene 106 verwaltet ferner sowohl die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk-Slices zu erzeugen und zu verwalten. Aufgrund der vielzähligen Aufgaben der Management- & Instrumentierungsebene 106 handelt es sich dabei in der Regel nicht um einen monolithischen Block von Funktionalität, sondern vielmehr um eine Sammlung modularer Funktionen, die Fortschritte integrieren, die in verschiedenen Netzwerkdomänen erzielt werden, wie beispielsweise NFV ("network function virtualization" = Netzwerkfunktionsvirtualisierung), SDN ("software-defined networking" = Software-definierte Vernetzung) oder SON ("self-organizing networks" = selbstorganisierende Netzwerke). Die Management- & Instrumentierungsebene 106 nutzt dabei datenunterstützte Intelligenz, um alle Aspekte der Dienstanordnung und - bereitstellung zu optimieren.

Die hier vorgestellten Geräte, Systeme und Verfahren sind dazu vorgesehen, die Kommunikation in Kommunikationsnetzen zu verbessern, insbesondere in 5G-Kommunikationsnetzen mit mehreren Netzwerk-Slices, wie im Folgenden beschrieben.

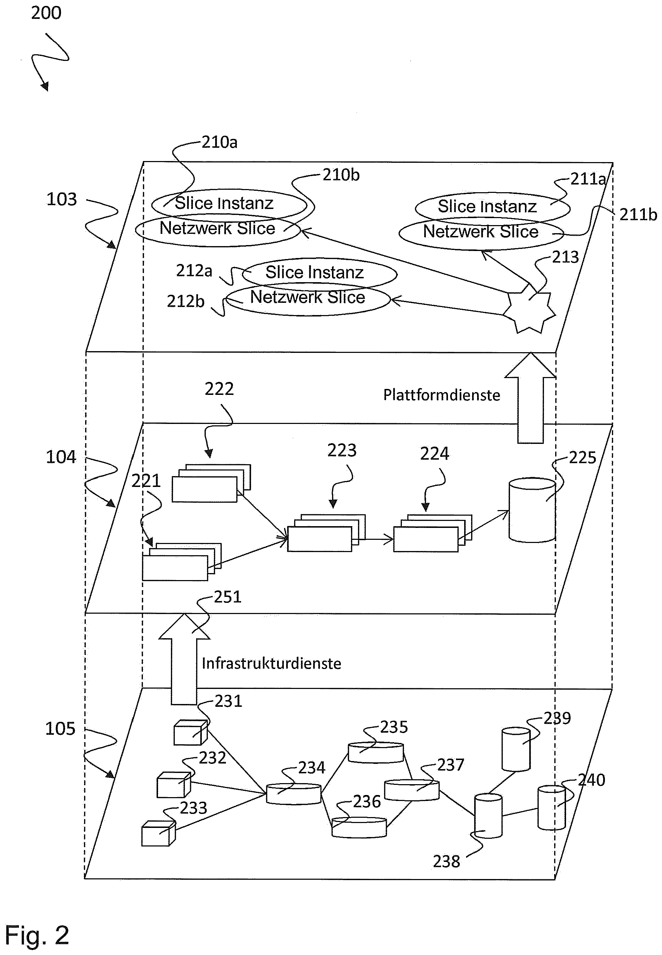

Figur 2 zeigt eine schematische Darstellung eines 5G-Kommunikationsnetzwerks 200 mit mehreren Netzwerk-Slices. Das 5G-Kommunikationsnetzwerk 200 umfasst eine Infrastruktur- & Ressourcenschicht 105, eine Aktivierungsschicht 104 und eine Anwendungsschicht 103.

Die Infrastruktur- & Ressourcenschicht 105 umfasst die gesamte physikalische Infrastruktur, die einem Netzwerkbetreiber zugeordnet sind, d.h. Standorte, Kabel, Netzwerkknoten etc. Diese Schicht 105 bildet die Grundlage für alle Netzwerk-Slices. Sie ist so generisch wie möglich aufgebaut, ohne zu viele spezialisierte physikalische Einheiten. Die Infrastruktur- & Ressourcenschicht 105 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 105 basieren auf Hardware und Software bzw. Firmware, die für die jeweilige Operation benötigt wird und dabei als Infrastruktur- & Ressourcenschicht 105 den darüber liegenden Schichten als Ressourcenobjekte zu Verfügung gestellt wird. Beispielsweise umfassen Objekte der Infrastruktur- & Ressourcenschicht 105 virtuelle Maschinen, virtuelle Links bzw. Verbindungen und virtuelle Netzwerke, z.B. virtuelle Zugangsknoten 231, 232, 233, virtuelle Netzwerkknoten 234, 235, 236, 237 und virtuelle Computerknoten 238, 239, 240. Wie der Begriff "virtuell" bereits sagt, stellt die Infrastruktur- & Ressourcenschicht 105 die Objekte in der Form einer "Infrastruktur als Dienst" 251, d.h. in einer abstrahierenden, virtualisierten Form der nächsthöheren Schicht 104 zur Verfügung.

Die Aktivierungsschicht 104 ist oberhalb der Infrastruktur- & Ressourcenschicht 105 angeordnet. Sie nutzt die Objekte der Infrastruktur- & Ressourcenschicht 105 und fügt diesen zusätzliche Funktionalität in Form von (z.B. nicht-physikalischen) Software Objekten /VNFs hinzu, um das Erzeugen von jeder Art von Netzwerk-Slices zu ermöglichen und so eine Plattform als Dienst der nächsthöheren Schicht 103 bereitzustellen.

Softwareobjekte können in jeder Granularität existieren, und ein winziges oder ein sehr großes Fragment einer Netzwerk-Slice umfassen. Um die Erzeugung von Netzwerk-Slices auf einem geeigneten Abstraktionslevel zu erlauben, können in der Aktivierungsschicht 104 verschiedene abstrahierte Objekte 221 mit anderen abstrahierten Objekten und mit virtuellen Netzwerkfunktionen 222 kombiniert werden, um kombinierte Objekte 223 zu bilden, die in aggregierte Objekten 224 überführt werden können und in einer Objektbibliothek 225 der nächsthöheren Ebene zur Verfügung gestellt werden. Damit kann die Komplexität hinter den Netzwerk-Slices verborgen werden. Beispielsweise kann ein Nutzer einen mobilen Breitband-Slice erzeugen und dabei lediglich KPIs (Key Performance Indikatoren) definieren, ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 104, dass sie die dynamische Umordnung von Funktionen und Konnektivitäten in einer Netzwerk-Slice unterstützt, z.B. durch Verwendung von SFC ("Service Function Chaining" = Dienstfunktionenverkettung) oder modifizierender Software, so dass die Funktionalität einer Slice vollständig vordefiniert werden kann und sowohl näherungsweise statische Softwaremodule als auch dynamisch hinzufügbare Softwaremodule umfassen kann.

Eine Netzwerk-Slice kann dabei als software-definierte Entität betrachtet werden, die auf einem Satz von Objekten basiert, welche ein vollständiges Netzwerk definieren. Die Aktivierungsschicht 104 spielt für dieses Konzept eine Schlüsselrolle, da sie alle Softwareobjekte umfasst kann, die notwendig sind, um die Netzwerk-Slice und die entsprechenden Fertigkeiten zum Handhaben der Objekte bereitzustellen. Die Aktivierungsschicht 104 kann als eine Art von Netzwerk-Betriebssystem betrachtet werden, komplementiert durch eine Netzwerkerzeugungsumgebung. Eine wesentliche Aufgabe der Aktivierungsschicht 104 ist das Definieren der entsprechenden Abstraktionsebenen. So haben Netzwerkbetreiber ausreichend Freiraum um ihre Netzwerk-Slices auszugestalten, während der Plattform-Betreiber immer noch die physikalischen Knoten instand halten und optimieren kann. So wird beispielsweise die Ausführung der alltäglichen Aufgaben wie das Hinzufügen oder Ersetzen von NodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln der Netzwerk-Slice-Umgebung.

Eine Netzwerk-Slice, auch als 5G-Slice bezeichnet, unterstützt die Kommunikationsdienste eines bestimmten Verbindungstyps mit einer bestimmten Art der Handhabung der C- (Control bzw. Steuerungs-) und U-(User Data bzw. Nutzerdaten) Schicht. Eine 5G-Slice setzt sich zusammen aus einer Sammlung von verschiedenen 5G-Netzwerkfunktionen und spezifischen Funkzugangstechnologie-Einstellungen (RAT = radio access technology), die für den spezifischen Anwendungsfall miteinander kombiniert werden. Daher kann eine 5G-Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie sowie eine Konfiguration der 5G-Geräte. Nicht alle Slices enthalten dieselben Funktionen, einige Funktionen, die heute für ein mobiles Netzwerk als wesentlich erscheinen, können sogar in einigen Slices nicht vorkommen. Die Intention einer 5G-Slice ist es, nur die Funktionen bereitzustellen, die für den spezifischen Anwendungsfall notwendig sind, und alle anderen unnötigen Funktionalitäten zu vermeiden. Die Flexibilität hinter dem Slice-Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte von Slices über geeignete APIs zu steuern, um so maßgeschneiderte Dienste bereitstellen zu können.

Die Anwendungsschicht 103 umfasst alle erzeugten Netzwerk-Slices 210b, 211b, 212b und bietet diese als "Netzwerk als Service" verschiedenen Netzwerknutzern, z.B. verschiedenen Kunden an. Das Konzept erlaubt die Wiederbenutzung von definierten Netzwerk-Slices 210b, 211b, 212b für verschiedene Anwender, beispielsweise als eine neue Netzwerk-Slice-Instanz 210a, 211a, 212a. Beispielsweise kann eine Netzwerk-Slice 210b, 211b, 212b, welche beispielsweise einer Automotive-Anwendung zugeordnet ist, auch für Anwendungen verschiedener anderer industrieller Anwendungen genutzt werden. Die Slice-Instanzen 210a, 211a, 212a, die von einem ersten Anwender erzeugt wurden, können beispielsweise unabhängig von den Slice-Instanzen sein, die von einem zweiten Anwender erzeugt wurden, und das obwohl die gesamte Netzwerk-Slice-Funktionalität dieselbe sein kann.

Gemäß einem ersten Aspekt betrifft die Erfindung einen Applikationsserver zum Verwalten von Applikationen für ein mobiles Kommunikationsgerät in einem Kommunikationsnetzwerk, wobei das mobile Kommunikationsgerät ausgebildet ist, über eine Funk-Basisstation mit dem Applikationsserver zu kommunizieren. Der Applikationsserver umfasst eine Kommunikationsschnittstelle, welche ausgebildet ist, ein Positionsinformationssignal von der Funk-Basisstation zu empfangen, wobei das Positionsinformationssignal Informationen über eine Position des mobilen Kommunikationsgeräts umfasst, sowie einen Prozessor, welcher ausgebildet ist, über die Kommunikationsschnittstelle auf der Basis des Positionsinformationssignals eine Applikation für das mobile Kommunikationsgerät frei zu schalten.

Unter einer Funk-Basisstation wird hier eine in der Regel ortsfeste Übertragungseinrichtung für Funksignale von Mobilfunknetzen oder drahtlosen Netzwerken (WLANs) verstanden. Somit kann es sich bei der Funk-Basisstation um eine Mobilfunk-Basisstation oder eine WLAN-Basisstation handeln. In einer Ausführungsform kann die Funk-Basisstation Teil des Applikationsservers sein. In einer Ausführungsform können die Funk-Basisstation und der Applikationsserver separate Einheiten sein und beispielsweise drahtlos oder drahtgebunden miteinander kommunizieren.

In einer Ausführungsform kommt die freigeschaltete Applikation auf dem mobilen Kommunikationsgerät zur Ausführung. In einer Ausführungsform führt der Applikationsserver die freigeschaltete Applikation für das mobile Kommunikationsgerät aus.

In einer Ausführungsform ist der Prozessor ausgebildet, die Applikation für das mobile Kommunikationsgerät dann frei zu schalten, wenn das Positionsinformationssignal anzeigt, dass sich das mobile Kommunikationsgerät in einem definierten Positionsbereich befindet.

In einer Ausführungsform definiert die Funk-Basisstation eine Funkzelle, wobei der definierte Positionsbereich durch die Funkzelle der Funk-Basisstation oder zumindest durch einen Teil der Funkzelle der Funk-Basisstation definiert wird.

In einer Ausführungsform basiert das Positionsinformationssignal auf einer Erfassung einer Feldstärke des mobilen Kommunikationsgeräts durch die Funk-Basisstation oder einer Erfassung einer Feldstärke der Funk-Basisstation durch das mobile Kommunikationsgerät.

In einer Ausführungsform ist der Prozessor ferner ausgebildet, ansprechend auf eine Anfrage des mobilen Kommunikationsgeräts, die Applikation freizuschalten, über die Kommunikationsschnittstelle auf der Basis des Positionsinformationssignals die Applikation für das mobile Kommunikationsgerät frei zu schalten.

In einer Ausführungsform ist der Applikationsserver Teil eines logischen Subnetzwerks des Kommunikationsnetzwerks, wobei der Prozessor ferner ausgebildet ist, auf der Basis des Positionsinformationssignals zu veranlassen, dass das mobile Kommunikationsgerät in das logische Subnetzwerk eingebunden wird und die freigeschaltete Applikation des mobilen Kommunikationsgeräts als Ressource dem logischen Subnetzwerk zur Verfügung gestellt wird.

In einer Ausführungsform ist der Prozessor ferner ausgebildet, die Applikation für das mobile Kommunikationsgerät zu sperren, wenn das Positionsinformationssignal anzeigt, dass sich das mobile Kommunikationsgerät außerhalb des definierten Positionsbereichs befindet.

Gemäß einem zweiten Aspekt betrifft die Erfindung ein Verfahren zum Verwalten von Applikationen für ein mobiles Kommunikationsgerät in einem Kommunikationsnetzwerk, wobei das mobile Kommunikationsgerät ausgebildet ist, über eine Funk-Basisstation mit einem Applikationsserver zu kommunizieren. Dabei umfasst das Verfahren das Empfangen eines Positionsinformationssignal von der Funk-Basisstation durch den Applikationsserver, wobei das Positionsinformationssignal Informationen über eine Position des mobilen Kommunikationsgeräts umfasst, sowie das Freischalten einer Applikation für das mobile Kommunikationsgerät auf der Basis des Positionsinformationssignals durch den Applikationsserver.

In einer Ausführungsform wird die Applikation dann für das mobile Kommunikationsgerät freigeschaltet, wenn das Positionsinformationssignal anzeigt, dass sich das mobile Kommunikationsgerät in einem definierten Positionsbereich befindet.

In einer Ausführungsform definiert die Funk-Basisstation eine Funkzelle, wobei der definierte Positionsbereich durch die Funkzelle der Funk-Basisstation oder zumindest durch einen Teil der Funkzelle der Funk-Basisstation definiert wird.

In einer Ausführungsform basiert das Positionsinformationssignal auf einer Erfassung einer Feldstärke des mobilen Kommunikationsgeräts durch die Funk-Basisstation oder einer Erfassung einer Feldstärke der Funk-Basisstation durch das mobile Kommunikationsgerät.

In einer Ausführungsform umfasst das Verfahren vor dem Schritt des Freischaltens der Applikation für das mobile Kommunikationsgerät auf der Basis des Positionsinformationssignals einen weiteren Schritt des Empfangens einer Anfrage des mobilen Kommunikationsgeräts, die Applikation freizuschalten.

In einer Ausführungsform umfasst das Verfahren den weiteren Schritt, dass das mobile Kommunikationsgerät in ein logisches Subnetzwerk des Kommunikationsnetzwerks eingebunden wird und die für das mobile Kommunikationsgerät freigeschaltete Applikation als Ressource dem logischen Subnetzwerk zur Verfügung gestellt wird.

In einer Ausführungsform umfasst das Verfahren den weiteren Schritt, die Applikation für das mobile Kommunikationsgerät zu sperren, wenn das Positionsinformationssignal anzeigt, dass sich das mobile Kommunikationsgerät außerhalb des definierten Positionsbereichs befindet.

Gemäß einem dritten Aspekt betrifft die Erfindung ein Computerprogrammprodukt mit Computerprogrammcode zur Durchführung des Verfahrens gemäß dem zweiten Aspekt der Erfindung.

Weitere Ausführungsbeispiele werden Bezug nehmend auf die beiliegenden Zeichnungen erläutert. Es zeigen:
Fig. 1 eine schematische Darstellung der Architektur eines 5G-Kommunikationsnetzwerkes;
Fig. 2 eine schematische Darstellung eines 5G-Kommunikationsnetzwerks mit mehreren Netzwerk-Slices;
Fig. 3 eine schematische Darstellung eines Kommunikationsnetzwerks mit einem Applikationsserver gemäß einer Ausführungsform; und
Fig. 4 eine schematische Darstellung eines Verfahrens zum Verwalten von Applikationen auf einem mobilen Kommunikationsgerät in dem Kommunikationsnetzwerk von Figur 3 gemäß einer Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne vom Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Es werden Vorrichtungen beschrieben, und es werden Verfahren beschrieben. Es versteht sich, dass Grundeigenschaften der Vorrichtungen auch für die Verfahren gelten und umgekehrt. Deshalb wird der Kürze halber gegebenenfalls auf eine doppelte Beschreibung solcher Merkmale verzichtet.

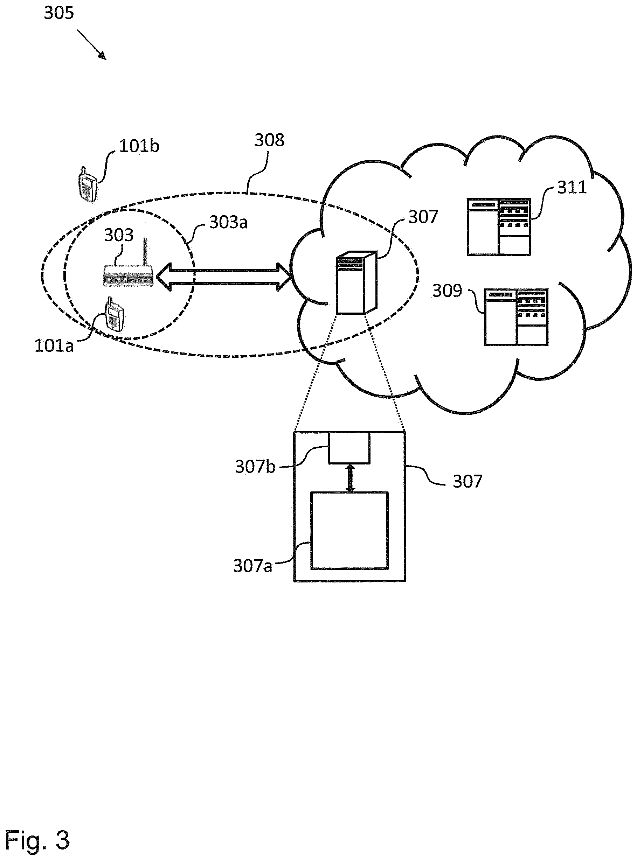

Figur 3 zeigt eine schematische Darstellung eines Kommunikationsnetzwerks 305 gemäß einer Ausführungsform. Das Kommunikationsnetzwerk 305 kann gemäß einem oder mehreren Mobilfunkstandards ausgebildet sein. Bei der in Figur 3 dargestellten Ausführungsform handelt es sich bei dem Kommunikationsnetzwerk 305 um ein Mobilfunkkommunikationsnetzwerk 305 gemäß dem 5G-Standard.

Das Kommunikationsnetzwerk 305 umfasst einen Applikationsserver 307 zum Verwalten von Software-Applikationen für mobile Kommunikationsendgeräte, wobei der Applikationsserver 307 einen Prozessor 307a und eine Kommunikationsschnittstelle 307b umfasst. In der Figur 3 sind beispielhaft zwei mobile Kommunikationsendgeräte 101a und 101b dargestellt, bei denen es sich beispielsweise um Smartphones handeln kann, und die ausgebildet sind, mittels eines Prozessors in einem Speicher hinterlegte Applikationen auszuführen. Die mobilen Kommunikationsendgeräte 101a und 101b sind dazu ausgebildet, über eine Funk-Basisstation 303 mit dem Applikationsserver 307 zu kommunizieren.

Bei der Funk-Basisstation 303 handelt es sich um eine Übertragungseinrichtung für Funksignale von Mobilfunknetzen oder drahtlosen Netzwerken (WLANs). Somit kann es sich bei der Funk-Basisstation 303 um eine Mobilfunk-Basisstation oder eine WLAN-Basisstation handeln. In einer Ausführungsform kann die Funk-Basisstation 303 Teil des Applikationsservers 307 sein. In einer Ausführungsform können die Funk-Basisstation 303 und der Applikationsserver 307, wie in Figur 3 dargestellt, separate Einheiten sein und beispielsweise drahtlos oder drahtgebunden miteinander kommunizieren.

Die Kommunikationsschnittstelle 307b des Applikationsservers 307 ist ausgebildet, ein Positionsinformationssignal von der Funk-Basisstation 303 zu empfangen, wobei das Positionsinformationssignal Informationen über die Position des mobilen Kommunikationsgeräts 101a und/oder über die Position des mobilen Kommunikationsgeräts 101b umfasst.

Gemäß einer Ausführungsform kann das Positionsinformationssignal lediglich die Information enthalten, ob sich ein jeweiliges mobiles Kommunikationsgerät 101a,b in der von der Funk-Basisstation 303 definierten Funkzelle 303a befindet. Gemäß einer Ausführungsform kann dies dadurch bestimmt werden, indem überprüft wird, ob ein jeweiliges mobiles Kommunikationsgerät 101a,b mit der Funk-Basisstation 303 verbunden ist. Gemäß weiterer Ausführungsformen kann das Positionsinformationssignal auch Positionsinformationen enthalten, die direkt von dem jeweiligen mobilen Kommunikationsgerät 101a,b bereitgestellt werden, beispielsweise basierend auf einem Bewegungssensor und/oder einem GPS-Sensor.

Der Prozessor 307a des Applikationsservers 307 ist ferner ausgebildet, über die Kommunikationsschnittstelle 307b auf der Basis des Positionsinformationssignals eine Applikation für das jeweilige mobile Kommunikationsgerät 101a,b frei zu schalten. In einer Ausführungsform kommt die freigeschaltete Applikation auf dem mobilen Kommunikationsgerät 101a,b zur Ausführung. In einer Ausführungsform kann der Applikationsserver 307 die freigeschaltete Applikation für das mobile Kommunikationsgerät 101a,b ausführen.

In einer Ausführungsform ist der Prozessor 307a des Applikationsservers 307 ausgebildet, die Applikation für das jeweilige mobile Kommunikationsgerät 101a,b frei zu schalten, wenn das Positionsinformationssignal anzeigt, dass sich das jeweilige mobile Kommunikationsgerät 101a,b in einem definierten Positionsbereich befindet. In einer Ausführungsform wird der definierte Positionsbereich durch die Funkzelle 303a der Funk-Basisstation 303 oder zumindest einen Teil davon definiert. Auf diese Weise können auf einfache Art und Weise die Authentifizierungsmechanismen des Funkaufbaus zwischen dem mobilen Kommunikationsgerät 101a,b und der Funk-Basisstation genutzt werden, um ein Freischalten einer Applikation für das mobile Kommunikationsgerät 101a,b durch den Applikationsserver 307 zu authentifizieren.

Eine Begrenzung des definierten Positionsbereichs kann beispielsweise dadurch erreicht werden, dass das Positionsinformationssignal auf einer Erfassung einer Feldstärke des jeweiligen mobilen Kommunikationsgeräts 101a,b durch die Funk-Basisstation 303 basiert oder auf einer Erfassung einer Feldstärke der Funk-Basisstation 303 durch das jeweilige mobile Kommunikationsgerät 101a,b basiert und mittels eines definierbaren Schwellenwerts für die Feldstärke der Positionsbereich definiert wird (d.h. das jeweilige mobile Kommunikationsgerät 101a,b befindet sich innerhalb des definierten Positionsbereichs, wenn die Feldstärke größer als der Schwellenwert ist, andernfalls außerhalb des definierten Positionsbereichs).

In der in Figur 3 dargestellten Ausführungsform ist das mobile Kommunikationsgerät 101a mit der Funk-Basisstation 303 verbunden und befindet sich somit innerhalb des definierten Positionsbereichs, wohingegen das mobile Kommunikationsgerät 101b nicht mit der Funk-Basisstation 303 verbunden ist und sich somit außerhalb des definierten Positionsbereichs befindet.

In einer Ausführungsform ist der Prozessor 307a des Applikationsservers 307 ferner ausgebildet, ansprechend auf eine Anfrage des mobilen Kommunikationsgeräts 101a, die Applikation freizuschalten, über die Kommunikationsschnittstelle 307b die von dem mobilen Kommunikationsgerät 101a angefragte Applikation frei zu schalten.

In einer Ausführungsform ist der Prozessor 307a des Applikationsservers 307 ferner ausgebildet, die Applikation für das mobile Kommunikationsgerät 101a zu sperren, wenn das Positionsinformationssignal anzeigt, dass sich das mobile Kommunikationsgerät 101a außerhalb des definierten Positionsbereichs befindet. Mit anderen Worten: wenn das mobile Kommunikationsgerät 101a beispielsweise die Funkzelle 303a wieder verlässt, sperrt der Prozessor 307a des Applikationsservers 307 die zunächst freigeschaltete Applikation für das mobile Kommunikationsgerät 101a. Gemäß einer Ausführungsform kann der Applikationsserver 307 hierzu einen weiteren Kommunikationskanal wählen, beispielsweise einen Kommunikationskanal über eine Mobilfunk-Basisstation. Alternativ kann auch das mobile Kommunikationsgerät 101a derart ausgebildet sein, dass dann, wenn das mobile Kommunikationsgerät 101a die Funkzelle 303a und somit die Konnektivität mit der Funk-Basisstation 303 verliert, automatisch die zuvor vom Applikationsserver 307 freigeschaltete Applikation wieder gesperrt wird.

Wie vorstehend bereits beschrieben, kann es sich bei dem in Figur 3 dargestellten Kommunikationsnetzwerk 305 um ein Kommunikationsnetzwerk gemäß dem 5G-Standard handeln. In einer solchen Ausführungsform kann der Applikationsserver 307 Teil eines logischen Subnetzwerks 308 (auch als Netzwerk-Slice 308 bezeichnet) des Kommunikationsnetzwerks 305 sein, wobei der Prozessor 307a des Applikationsservers 307 ferner ausgebildet ist, auf der Basis des Positionsinformationssignals zu veranlassen, dass das mobile Kommunikationsgerät 101a in die Netzwerk-Slice 308 des Kommunikationsnetzwerks 305 eingebunden wird und die freigeschaltete Applikation des mobilen Kommunikationsgeräts 101a als Ressource der Netzwerk-Slice 308 zur Verfügung gestellt wird. In einer Ausführungsform kann der Applikationsserver hierzu eine entsprechende Nachricht an einen SDN-Orchestrator 309 des Kommunikationsnetzwerkes 305 senden, wobei die Abkürzung SDN für "Software Defined Networking" steht. Ferner kann ein SDN-Controller 311 in dem Kommunikationsnetzwerk 305 vorgesehen sein, der für die in der Netzwerk-Slice 308 notwendigen Vernetzung dient, insbesondere zum Weiterleiten von Datenpaketen in der Netzwerk-Slice 308 auf der Basis von Switches, die vom SDN-Controller 311 gesteuert werden.

Wie bereits vorstehend beschrieben, bezeichnet der Begriff "Netzwerk-Slice" bzw. "Netzwerk-Slicing" ein Konzept zum Betreiben eines oder mehrerer logischer Netzwerke als virtuell unabhängige, d.h. logisch entkoppelte, Einheiten auf einer gemeinsamen physikalischen Netzwerk-Infrastruktur. In diesem Sinne stellt eine Netzwerk-Slice ein unabhängiges virtuelles Ende-zu-Ende-Netzwerk dar, das sich aus Anwendersicht auf dieselbe Art und Weise verhält wie ein physikalisches Netzwerk, einschließlich einer Business-Logik und Netzwerkmanagementfähigkeiten. Für weitere Details zu Netzwerk-Slices im Sinne der vorlegenden Erfindung wird auf "NGMN 5G White Paper" und insbesondere auf den Abschnitt 5.4 davon verwiesen, das auf der Webseite der "NGMN Alliance" unter der URL "https://www.ngmn.org/home.html" abgerufen werden kann und auf das hiermit vollumfänglich Bezug genommen wird.

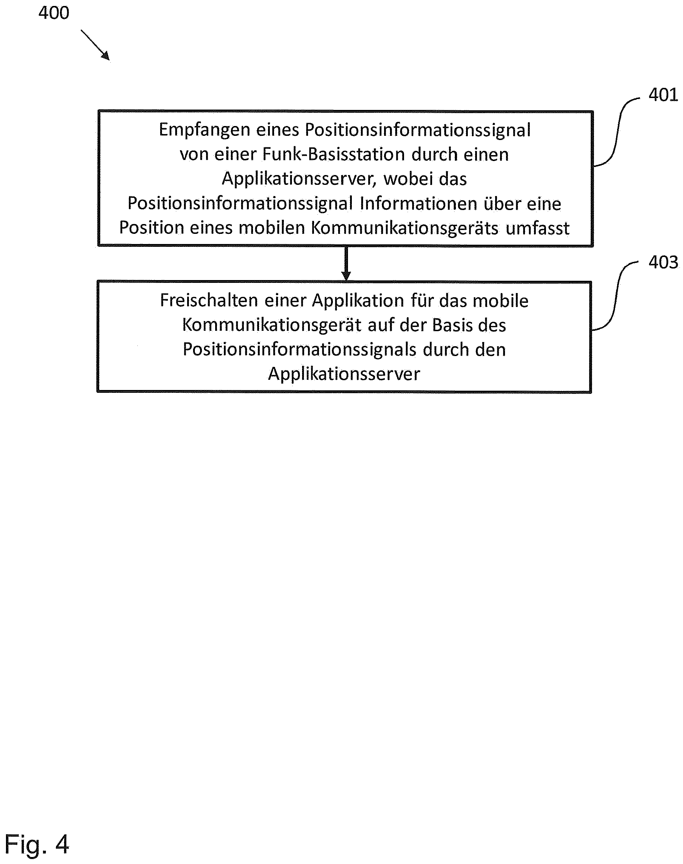

Figur 4 zeigt eine schematische Darstellung eines Verfahrens 400 zum Verwalten von Applikationen für die mobilen Kommunikationsgeräte 101a,b in dem Kommunikationsnetzwerk 305 von Figur 3 gemäß einer Ausführungsform. Das Verfahren 400 umfasst einen Schritt 401 des Empfangen 401 eines Positionsinformationssignal von der Funk-Basisstation 303 durch den Applikationsserver 307, wobei das Positionsinformationssignal Informationen über eine Position des mobilen Kommunikationsgeräts 101a,b umfasst, sowie einen Schritt 403 des Freischaltens einer Applikation für das mobile Kommunikationsgerät 101a,b auf der Basis des Positionsinformationssignals durch den Applikationsserver 307.

Ausführungsformen der Erfindung können beispielsweise bei den folgenden Anwendungen vorteilhaft eingesetzt werden: örtliche Druckerauswahl, Smart-Home-Steuerung (Licht, Jalousien), Freischalten einer Arbeitsgruppe, Zusammenstellen eines Gruppennetzwerkes, ortsabhängige Steuerung von Berechtigungen und dergleichen.

## Patentansprüche

1. Applikationsserver (307) zum Verwalten von Applikationen für ein mobiles Kommunikationsgerät (101a,b) in einem Kommunikationsnetzwerk (305), wobei das mobile Kommunikationsgerät (101a,b) ausgebildet ist, über eine Funk-Basisstation (303) mit dem Applikationsserver (307) zu kommunizieren, wobei der Applikationsserver (307) Teil eines logischen Subnetzwerks (308) des Kommunikationsnetzwerks (305) ist, wobei der Applikationsserver (307) umfasst:
eine Kommunikationsschnittstelle (307b), welche ausgebildet ist, ein Positionsinformationssignal von der Funk-Basisstation (303) zu empfangen, wobei das Positionsinformationssignal Informationen über eine Position des mobilen Kommunikationsgeräts (101a,b) umfasst; und
einen Prozessor (307a), welcher ausgebildet ist, über die Kommunikationsschnittstelle (307b) auf der Basis des Positionsinformationssignals eine Applikation für das mobile Kommunikationsgerät (101a,b) frei zu schalten, und wobei der Prozessor (307a) ferner ausgebildet ist, auf der Basis des Positionsinformationssignals zu veranlassen, dass das mobile Kommunikationsgerät (101a,b) in das logische Subnetzwerk (308) eingebunden wird und die für das mobile Kommunikationsgerät (101a,b) freigeschaltete Applikation als Ressource dem logischen Subnetzwerk (308) zur Verfügung gestellt wird.

2. Applikationsserver (307) nach Anspruch 1, wobei der Prozessor (307a) ausgebildet ist, die Applikation für das mobile Kommunikationsgerät (101a,b) frei zu schalten, wenn das Positionsinformationssignal anzeigt, dass sich das mobile Kommunikationsgerät (101a,b) in einem definierten Positionsbereich (303a) befindet.

3. Applikationsserver (307) nach Anspruch 2, wobei die Funk-Basisstation (303) eine Funkzelle (303a) definiert und wobei der definierte Positionsbereich (303a) durch die Funkzelle (303a) der Funk-Basisstation (303) oder einen Teil davon definiert wird.

4. Applikationsserver (307) nach einem der vorstehenden Ansprüche, wobei das Positionsinformationssignal auf einer Erfassung einer Feldstärke des mobilen Kommunikationsgeräts (101a,b) durch die Funk-Basisstation (303) basiert oder einer Erfassung einer Feldstärke der Funk-Basisstation (303) durch das mobile Kommunikationsgerät (101a,b) basiert.

5. Applikationsserver (307) nach einem der vorstehenden Ansprüche, wobei der Prozessor (307a) ferner ausgebildet ist, ansprechend auf eine Anfrage des mobilen Kommunikationsgeräts (101a,b), die Applikation freizuschalten, über die Kommunikationsschnittstelle (307b) auf der Basis des Positionsinformationssignals die Applikation für das mobile Kommunikationsgerät (101a,b) frei zu schalten.

6. Applikationsserver (307) nach einem der vorstehenden Ansprüche, wobei der Prozessor (307a) ferner ausgebildet ist, die Applikation für das mobile Kommunikationsgerät (101a,b) zu sperren, wenn das Positionsinformationssignal anzeigt, dass sich das mobile Kommunikationsgerät (101a,b) außerhalb des definierten Positionsbereichs (303a) befindet.

7. Verfahren (400) zum Verwalten von Applikationen für ein mobiles Kommunikationsgerät (101a,b) in einem Kommunikationsnetzwerk (305), wobei das mobile Kommunikationsgerät (101a,b) ausgebildet ist, über eine Funk-Basisstation (303) mit einem Applikationsserver (307) zu kommunizieren, wobei der Applikationsserver (307) Teil eines logischen Subnetzwerks (308) des Kommunikationsnetzwerks (305) ist, wobei das Verfahren (400) umfasst:
Empfangen (401) eines Positionsinformationssignal von der Funk-Basisstation (303) durch den Applikationsserver (307), wobei das Positionsinformationssignal Informationen über eine Position des mobilen Kommunikationsgeräts (101a,b) umfasst;
Freischalten (403) einer Applikation für das mobile Kommunikationsgerät (101a,b) auf der Basis des Positionsinformationssignals durch den Applikationsserver (307); und
Veranlassen, auf der Basis des Positionsinformationssignals, dass das mobile Kommunikationsgerät (101a,b) in das logische Subnetzwerk (308) eingebunden wird und die für das mobile Kommunikationsgerät (101a,b) freigeschaltete Applikation als Ressource dem logischen Subnetzwerk (308) zur Verfügung gestellt wird.

8. Verfahren (400) nach Anspruch 7, wobei die Applikation dann für das mobile Kommunikationsgerät (101a,b) freigeschaltet wird, wenn das Positionsinformationssignal anzeigt, dass sich das mobile Kommunikationsgerät (101a,b) in einem definierten Positionsbereich (303a) befindet.

9. Verfahren (400) nach Anspruch 8, wobei die Funk-Basisstation (303) eine Funkzelle (303a) definiert und wobei der definierte Positionsbereich (303a) durch die Funkzelle (303a) der Funk-Basisstation (303) oder einen Teil davon definiert wird.

10. Verfahren (400) nach einem der Ansprüche 7 bis 9, wobei das Positionsinformationssignal auf einer Erfassung einer Feldstärke des mobilen Kommunikationsgeräts (101a,b) durch die Funk-Basisstation (303) basiert oder einer Erfassung einer Feldstärke der Funk-Basisstation (303) durch das mobile Kommunikationsgerät (101a,b) basiert.

11. Verfahren (400) nach einem der Ansprüche 7 bis 10, wobei das Verfahren (400) vor dem Schritt (403) des Freischaltens der Applikation für das mobile Kommunikationsgerät (101a,b) auf der Basis des Positionsinformationssignals einen weiteren Schritt des Empfangens einer Anfrage des mobilen Kommunikationsgeräts (101a,b), die Applikation freizuschalten, umfasst.

12. Verfahren (400) nach einem der Ansprüche 7 bis 11, wobei das Verfahren (400) den weiteren Schritt umfasst, die Applikation für das mobile Kommunikationsgerät (101a,b) zu sperren, wenn das Positionsinformationssignal anzeigt, dass sich das mobile Kommunikationsgerät (101a,b) außerhalb des definierten Positionsbereichs (303a) befindet.

13. Computerprogrammprodukt mit Computerprogrammcode zur Durchführung des Verfahrens (400) nach einem der Ansprüche 7 bis 12 auf einem Prozessor.

## Claims

1. An application server (307) for managing applications for a mobile communication device (101a, b) in a communication network (305), wherein the mobile communication device (101a, b) is configured to communicate with the application server (307) via a wireless base station (303), wherein the application server (307) is part of a logic subnetwork (308) of the communication network (305), wherein the application server (307) comprises:
a communication interface (307b) which is configured to receive a position information signal from the wireless base station (303), wherein the position information signal comprises information concerning a position of the mobile communication device (101a, b); and
a processor (307a) which is configured to enable an application for the mobile communication device (101a, b) via the communication interface (307b) on the basis of the position information signal, wherein the processor (307a) is further configured to induce inclusion of the mobile communication device (101a, b) into the logic subnetwork (308) and to induce provisioning of the application, enabled for the mobile communication device (101a, b), as a resource to the logic subnetwork (308), on the basis of the position information signal.

2. The application server (307) according to Claim 1, wherein the processor (307a) is configured to enable the application for the mobile communication device (101a, b) when the position information signal indicates that the mobile communication device (101a, b) is located within a defined position area (303a) .

3. The application server (307) according to Claim 2, wherein the wireless base station (303) defines a wireless communication cell (303a), and wherein the defined position area (303a) is defined by the wireless communication cell (303a) of the wireless base station (303) or by a portion thereof.

4. The application server (307) according to any of the preceding claims, wherein the position information signal is based on a detection of a field strength of the mobile communication device (101a, b) by the wireless base station (303) or the detection of a field strength of the wireless base station (303) by the mobile communication device (101a, b).

5. The application server (307) according to any of the preceding claims, wherein the processor (307a) is further configured to enable the application for the mobile communication device (101a, b) via the communication interface (307b) on the basis of the position information signal, in response to a request to enable the application from the mobile communication device (101a, b).

6. The application server (307) according to any of the preceding claims, wherein the processor (307a) is further configured to disable the application for the mobile communication device (101a, b) when the position information signal indicates that the mobile communication device (101a, b) is located outside of the defined position area (303a).

7. A method (400) for managing applications for a mobile communication device (101a, b) in a communication network (305), wherein the mobile communication device (101a, b) is configured to communicate with an application server (307) via a wireless base station (303), wherein the application server (307) is part of a logic subnetwork (308) of the communication network (305), and wherein the method (400) comprises:
receiving (401) a position information signal from the wireless base station (303) by the application server (307), wherein the position information signal comprises information concerning a position of the mobile communication device (101a, b); and enabling (403) an application for the mobile communication device (101a, b) by the application server (307), on the basis of the position information signal; and
inducing inclusion of the mobile communication device (101a, b) into the logic subnetwork (308) and provisioning of the application, enabled for the mobile communication device (101a, b), as a resource to the logic subnetwork (308), on the basis of the position information signal.

8. The method (400) according to Claim 7, wherein the application is enabled for the mobile communication device (101a, b) when the position information signal indicates that the mobile communication device (101a, b) is located within a defined position area (303a).

9. The method (400) according to Claim 8, wherein the wireless base station (303) defines a wireless communication cell (303a), and wherein the defined position area (303a) is defined by the wireless communication cell (303a) of the wireless base station (303) or by a portion thereof.

10. The method (400) according to any of Claims 7 to 9, wherein the position information signal is based on the detection of a field strength of the mobile communication device (101a, b) by the wireless base station (303) or the detection of a field strength of the wireless base station (303) by the mobile communication device (101a, b).

11. The method (400) according to any of Claims 7 to 10, wherein the method (400), prior to the step (403) of enabling the application for the mobile communication device (101a, b) on the basis of the position information signal, comprises a further step of receiving a request to enable the application from the mobile communication device (101a, b).

12. The method (400) according to any of Claims 7 to 11, wherein the method (400) comprises the further step of disabling the application for the mobile communication device (101a, b) when the position information signal indicates that the mobile communication device (101a, b) is located outside of the defined position area (303a).

13. A computer program product having a computer program code for carrying out the method (400) according to any of Claims 7 to 12 on a processor.

## Revendications

1. Serveur d'applications (307) pour la gestion d'applications pour un appareil de communication mobile (101a, b) dans un réseau de communication (305), dans lequel l'appareil de communication mobile (101a, b) est conçu pour communiquer par le biais d'une station de base radio (303) avec le serveur d'applications (307), dans lequel le serveur d'applications (307) fait partie d'un sous-réseau logique (308) du réseau de communication (305), dans lequel le serveur d'applications (307) comporte :
une interface de communication (307b) qui est conçue pour recevoir un signal d'informations de position de la station de base radio (303), dans lequel le signal d'informations de position comporte des informations sur une position de l'appareil de communication mobile (101a, b) ; et
un processeur (307a) qui est conçu pour débloquer, par le biais de l'interface de communication (307b) sur la base du signal d'informations de position, une application pour l'appareil de communication mobile (101a, b) et dans lequel le processeur (307a) est conçu en outre pour faire en sorte sur la base du signal d'informations de position que l'appareil de communication mobile (101a, b) soit intégré dans le sous-réseau logique (308) et que l'application débloquée pour l'appareil de communication mobile (101a, b) soit mise à disposition du sous-réseau logique (308) en tant que ressource.

2. Serveur d'applications (307) selon la revendication 1, dans lequel le processeur (307a) est conçu pour débloquer l'application pour l'appareil de communication mobile (101 a, b) lorsque le signal d'informations de position indique que l'appareil de communication mobile (101a, b) se trouve dans une plage de positions définie (303a).

3. Serveur d'applications (307) selon la revendication 2, dans lequel la station de base radio (303) définit une cellule radio (303a) et dans lequel la plage de positions définie (303a) est définie par la cellule radio (303a) de la station de base radio (303) ou par une partie de celle-ci.

4. Serveur d'applications (307) selon l'une quelconque des revendications précédentes, dans lequel le signal d'informations de position est basé sur une détection d'une intensité de champ de l'appareil de communication mobile (101a, b) par la station de base radio (303) ou est basé sur une détection d'une intensité de champ de la station de base radio (303) par l'appareil de communication mobile (101a, b).

5. Serveur d'applications (307) selon l'une quelconque des revendications précédentes, dans lequel le processeur (307a) est en outre conçu pour, en réponse à une demande de l'appareil de communication mobile (101a, b), débloquer l'application, par le biais de l'interface de communication (307b) débloquer l'application pour l'appareil de communication mobile (101a, b) sur la base du signal d'informations de position.

6. Serveur d'applications (307) selon l'une quelconque des revendications précédentes, dans lequel le processeur (307a) est en outre conçu pour bloquer l'application pour l'appareil de communication mobile (101a, b) lorsque le signal d'informations de position indique que l'appareil de communication mobile (101a, b) se trouve en dehors de la plage de positions définie (303a).

7. Procédé (400) de gestion d'applications pour un appareil de communication mobile (101a, b) dans un réseau de communication (305), dans lequel l'appareil de communication mobile (101a, b) est conçu pour communiquer, par le biais d'une station de base radio (303), avec un serveur d'applications (307), dans lequel le serveur d'applications (307) fait partie d'un sous-réseau logique (308) du réseau de communication (305), dans lequel le procédé (400) comporte :
la réception (401) d'un signal d'informations de position de la station de base radio (303) via le serveur d'applications (307), dans lequel le signal d'informations de position comporte des informations sur une position de l'appareil de communication mobile (101 a, b) ;
le déblocage (403) d'une application pour l'appareil de communication mobile (101a, b) sur la base du signal d'informations de position via le serveur d'applications (307) ; et
le fait de faire en sorte, sur la base du signal d'informations de position, que l'appareil de communication mobile (101a, b) soit intégré dans le sous-réseau logique (308) et que l'application débloquée pour l'appareil de communication mobile (101a, b) soit mise à disposition du sous-réseau logique (308) en tant que ressource.

8. Procédé (400) selon la revendication 7, dans lequel l'application est débloquée pour l'appareil de communication mobile (101a, b) lorsque le signal d'informations de position indique que l'appareil de communication mobile (101a, b) se trouve dans une plage de positions définie (303a).

9. Procédé (400) selon la revendication 8, dans lequel la station de base radio (303) définit une cellule radio (303a) et dans lequel la plage de positions définie (303a) est définie par la cellule radio (303a) de la station de base radio (303) ou par une partie de celle-ci.

10. Procédé (400) selon l'une quelconque des revendications 7 à 9, dans lequel le signal d'informations de position est basé sur une détection d'une intensité de champ de l'appareil de communication mobile (101a, b) par la station de base radio (303) ou est basé sur une détection d'une intensité de champ de la station de base radio (303) par l'appareil de communication mobile (101a, b).

11. Procédé (400) selon l'une quelconque des revendications 7 à 10, dans lequel le procédé (400) comporte, avant l'étape (403) du déblocage de l'application pour l'appareil de communication mobile (101a, b) sur la base du signal d'informations de position, une autre étape de réception d'une demande de l'appareil de communication mobile (101 a, b) de déblocage de l'application.

12. Procédé (400) selon l'une quelconque des revendications 7 à 11, dans lequel le procédé (400) comporte l'autre étape de bloquer l'application pour l'appareil de communication mobile (101a, b) lorsque le signal d'informations de position indique que l'appareil de communication mobile (101a, b) se trouve en dehors de la plage de positions définie (303a).

13. Produit-programme d'ordinateur pour l'exécution du procédé (400) selon l'une quelconque des revendications 7 à 12 sur un processeur.
